# EUROPÄISCHE PATENTSCHRIFT

(11) **EP 2 888 084 B1**
(45) Veröffentlichungstag und Bekanntmachung des Hinweises auf die Patenterteilung: **18.01.2017**
(21) Anmeldenummer: 13762401.1
(22) Anmeldetag: 20.08.2013
(51) Int. Cl.: B25J 17/02

(54) **VORRICHTUNG ZUM GREIFEN, BEWEGEN UND POSITIONIEREN EINES GEGENSTANDS IM RAUM**
DEVICE FOR GRIPPING, MOVING AND POSITIONING AN OBJECT IN SPACE
DISPOSITIF DE SAISIE, DE DÉPLACEMENT ET DE POSITIONNEMENT D'UN OBJET DANS L'ESPACE

(30) Priorität: 22.08.2012 EP 12005983
(43) Veröffentlichungstag der Anmeldung: 01.07.2015
(73) Patentinhaber: Güdel Germany GmbH, 74706 Osterburken (DE)
(72) Erfinder: MATTER, Manferd, 74747 Ravenstein-Merchingen (DE)
(74) Vertreter: Meyer-Roedern, Giso
(86) Internationale Anmeldenummer: PCT/EP2013/002505
(87) Internationale Veröffentlichungsnummer: WO 2014/029496

(56) Entgegenhaltungen:
- DE-A1- 3 036 116
- DE-A1-102010 052 418
- JP-U- 58 164 689
- JP-U- 59 176 787

## Beschreibung

Die Erfindung betrifft eine Vorrichtung zum Greifen, Bewegen und Positionieren eines Gegenstands im Raum.

Zur Veranschaulichung betrachte man exemplarisch den Transport eines Rohlings, aus dem ein Eisenbahnrad hergestellt wird. Der große, schwere, frisch geschmiedete Rohling kommt heiß aus einer Ofenstrecke. Auf einem Maschinentisch, einem Flurförderzeug, einem Stetigförderer o. ä. liegend, wird er von einem Greifwerkzeug an einem Portalroboter erfaßt und über einen Transportweg von einigen Metern, wenn nicht zig Metern einer Härtemaschine überstellt. Die Herausforderungen dabei sind vielfältig. Jeder Rohling hat als Einzelstück eine große Transportmasse. Die hohe Temperatur des Rohlings wirkt erschwerend. Sie führt zu einer besonders großen Haftreibung (Losbrechmoment) beim Aufnehmen mit dem Greifwerkzeug. Der Rohling kommt nicht besonders positionsgenau aus der Ofenstrecke. Er hat in der X-Y-Auflageebene eine Lagetoleranz von mehreren mm bis cm, die beim Aufnehmen mit dem Greifwerkzeug überbrückt werden muß. Nach Zurücklegen des meterlangen Transportwegs muß die Absetzposition des Rohlings an der Härtemaschine mit einer reproduzierbaren Genauigkeit von ca. 1,0 mm in allen drei Raumrichtungen stimmen.

Einer noch höheren Übergabegenauigkeit bedarf es, wenn der Rohling in einem späteren Bearbeitungsgang mit dem Portalroboter zu einem CNC-Bearbeitungszentrum transportiert wird, um dort beispielsweise verbohrt, zur Herstellung der Radlauffläche gedreht o. a. spanabhebend mit hoher Präzision bearbeitet zu werden. An dem CNC-Bearbeitungszentrum muß die Übergabe mit einer reproduzierbaren Genauigkeit von ca. 0,1 mm in allen drei Raumrichtungen erfolgen. Sonst wird die gewünschte Bearbeitungsgenauigkeit nicht erreicht.

Soviel zum Hintergrund, was die erfindungsgemäße Vorrichtung beim Greifen, Bewegen und Positionieren eines Gegenstands im Raum leistet. Der Gegenstand kann formvariabel, groß, heiß, maßungenau, schwer, unhandlich sein, an einer nicht besonders präzise vorgegebenen Aufnahmeposition ankommen und nach einem langen Transportweg punktgenau präzise zu übergeben sein.

Die erfindungsgemäße Vorrichtung hat eine flurfrei dreidimensional verstellbeweglich angetriebene Plattform und ein Greifwerkzeug daran. Bei der Plattform ist an das angetrieben bewegliche Tragelement eines Krans mit einem steifen Linearführungssystem, beispielsweise eines Brückenkrans oder Portalkrans, und bei dem Greifwerkzeug an das Greifsystem eines Roboters, beispielsweise eines Portalroboters, zu denken.

Die Wirkpaarung des Greifsystems wird kann durch Kraft-, Form- oder Stoffpaarung erzielt werden. Es kommen mechanische, pneumatische, magnetische und adhäsive Greifsysteme in Betracht. Wegen Größe und Gewicht des handzuhabenden Gegenstands stellt die Erfindung vorrangig auf mechanische Greifsysteme, insbesondere Zwei- oder Mehrfingergreifer in starr-gelenkiger Ausführung ab. Doch kommt es auf die Ausgestaltung des Greifsystems nicht entscheidend an.

Wenn sich das Greifwerkzeug an den handzuhabenden Gegenstand anlegt, um ihn zu ergreifen und aufzunehmen, sind Toleranzen zu bewältigen. Bei dem obigen Beispiel eines Rohlings für ein Eisenbahnrad geht es in erster Linie um Lagetoleranzen. Es können aber auch Form- und/oder Maßtoleranzen auftreten. Das Greifwerkzeug muß den Gegenstand an der genau richtigen Stelle greifen. Die Greifkraft muß kontrolliert werden, um einerseits einen sicheren Transport zu gewährleisten, andererseits aber Beschädigungen des Gegenstands und/oder Greifwerkzeugs bis hin zu dessen Selbstzerstörung zu verhindern. Um die angestrebte Ortsgenauigkeit beim Aufnehmen, in allen Phasen des Transports und beim Übergeben des Gegenstands zu erreichen, ist für die Plattform ein hochpräzises, steifes Linearführungssystem erforderlich. Anders als ein Greifer, der an einem Kranseil hängt, kann sich ein Greifwerkzeug an einer steif geführten Plattform aber nicht selbsttätig ausrichten.

Aus der Praxis ist es bekannt, zwischen der Plattform und dem Greifwerkzeug einer Vorrichtung der genannten Art eine sogenannte Ausgleichseinheit einzufügen. Ausgleichseinheiten sind als komplette Maschinenbauteile handelsüblich.

Durch die Ausgleichseinheit ist eine exakte Nullposition des Greifwerkzeugs bezüglich der Plattform vorgegeben. Das Greifwerkzeug ist aus dieser Nullposition heraus an der Plattform schwimmend beweglich. Es kann einen begrenzten Stellhub in allen drei Raumrichtungen vollführen, wenn es sich an den handzuhabenden Gegenstand anlegt und diesen ergreift. Der Stellhub vollzieht sich in Linearführungen der Ausgleichseinheit wie bei einem X-Y-Z-Tisch. Nachdem der Gegenstand erfaßt und von seiner Unterlage abgehoben ist, kann das Greifwerkzeug zentriert werden. Dabei wird die Ausgleichsbewegung kompensiert und das Greifwerkzeug in Nullposition ausgerichtet.

Eine Ausgleichseinheit nach Art eines X-Y-Z-Tischs mit reibungsarmen, genauen Linearführungen in allen drei Achsrichtungen ist aufwendig, sperrig und schwer, wenn große, schwere Gegenstände präzise gehandhabt werden sollen.

Aus der DE 30 36 116 A1 ist eine Greifvorrichtung mit einer verstellbeweglich angetriebenen Plattform bekannt. An der Plattform ist mit einem Kardangelenkarm ein Greifwerkzeug schwimmend beweglich angebracht.

Bei der Vorrichtung nach der DE 10 2010 052 418 A1 sind eine Plattform und ein Werkzeug durch vier Drehgelenkarme verbunden. Die Vorrichtung enthält Drehmomentbegrenzer, die eine starre Verbindung zwischen Plattform und Werkzeug herstellen.

Aus der DE 39 28 971 A1 ist ein Ausgleichselement zum Ausgleichen von Positions- und/oder Winkelabweichungen beim maschinellen Zusammenfügen von Komponenten bekannt. Als Ausgleichsbewegung zwischen zwei zueinander beweglichen Teilen des Ausgleichselements ist eine dreidimensionale Hub-, Dreh- oder Schwenkbewegung angesprochen. Die Teile werden durch eine Rückstellkraft in eine Nullposition vorgespannt und mit Zentrierelementen dreidimensional zentriert.

Aus der DE 38 21 548 A1 ist eine Vorrichtung zum Ausgleich von Läge- und Positionstoleranzen für einen Greifer eines Industrieroboters bekannt. Die Vorrichtung soll mit sehr kleinen Kraftaufwendungen auch größere Lageabweichungen in einer horizontalen Ebene ausgleichen können.

Die DE 38 01 654 A1 beschreibt ein Ausrichtsystem zum Ausrichten einer Vorrichtungsplatte gegenüber einem Maschinentisch mit einem Zentrierbolzen und einem Fixierbolzen.

Aus der WO 2006/063 629 A1 ist eine Ausgleichseinheit bekannt, die eine Ausgleichsbewegung in einer X-Y-Ebene senkrecht zu einer Axialrichtung bei einem automatischen Blindniet-Setzvorgang mit Hilfe eines Industrieroboters ermöglicht.

Aufgabe der Erfindung ist es, die nach dem Stand der Technik bekannten Ausgleichseinheiten baulich zu vereinfachen und ihr Eigengewicht zu verringern.

Zur Lösung dieser Aufgabe ist das Greifwerkzeug mit wenigstens drei, vorzugsweise einer geraden Zahl, im allgemeinen vier, im Quadranten angeordneten Kardangelenkarmen an der Plattform angelenkt.

Durch die Anordnung der Kardangelenkarme im Quadranten wird jeweils ein Paar benachbarter Kardangelenkarme parallel und bewegungsmäßig gleichgeschaltet. Die von Haus aus allseitige Beweglichkeit eines jeden Kardangelenks wird auf eine Beweglichkeit in zwei zueinander senkrechten Vertikalebenen beschränkt. Das trägt der hauptsächlich zu bewältigenden Lagetoleranz eines zu ergreifenden Gegenstands auf einer Unterlage Rechnung. Für die Beschränkung der Beweglichkeit genügen drei im Quadranten angeordnete Kardangelenkarme. Vier im Quadranten angeordnete Kardangelenkarme sind für eine gleichmäßige Verteilung der Tragkraft bevorzugt. Mehr als vier im Quadranten angeordnete Kardangelenkarme können bei speziell geformten, beispielsweise extrem langen Greifwerkzeugen geboten sein. Es empfiehlt sich im allgemeinen eine gerade Zahl von beispielsweise sechs, acht, zehn oder zwölf Kardangelenkarmen, die äquidistant über die Seiten des Quadranten zwischen den sowieso vorhandenen vier Kardangelenkarmen an dessen Ecken verteilt sind.

Durch die Anlenkung mit den Kardangelenkarmen hat das Greifwerkzeug Bewegungsspiel auf einer Kugelschale, deren unterer Pol (Nadir) vorteilhafterweise die Nullposition des Greifwerkzeugs markiert. Dann wirkt die Gewichtskraft als Rückstellkraft in die Nullposition.

In der Nullposition sind die Längsachsen aller Kardangelenkarme parallel in der Vertikalen orientiert. Außerhalb der Nullposition sind die Längsachsen jeweils eines Paares benachbarter Kardangelenkarme parallel. Das gilt in Längsrichtung und Querrichtung des Quadranten.

Bei vier Kardangelenkarmen bilden deren Längsachsen in der Nullstellung die vier parallelen vertikalen Seitenkanten des Quadranten. Bei nur drei Kardangelenkarmen liegen deren Längsachsen in der Nullstellung nicht in einer gemeinsamen Ebene.

Bei einer bevorzugten Ausführungsform hat ein jeder Kardangelenkarm beidendig Drehfreiheit um zwei zueinander senkrechte Drehachsen, die sich quer zu der Längsachse des Kardangelenkarms erstrecken. Eines dritten Drehfreiheitsgrads um die Längsachse bedarf es nicht.

Bei einer bevorzugten Ausführungsform sind die Kardangelenkarme in sich spiegelsymmetrisch. Sie haben dadurch oben-unten vertauschte Einbaustellungen, was Montagefehler ausschließt.

Bei einer bevorzugten Ausführungsform sind alle Kardangelenkarme baugleich. Dadurch ist ein unaufwendiger modularer Aufbau gewährleistet.

Bei einer bevorzugten Ausführungsform hat das Greifwerkzeug unterhalb der Plattform eine Nullposition, in der die Kardangelenkarme eine achsparallele Streckstellung mit vertikaler Längsachse einnehmen. Das hat den Vorteil, dass die Nullposition am Tiefpunkt (Nadir) der Ausgleichsbewegung liegt und die Gewichtskraft als Rückstellkraft in die Nullposition wirkt.

Bei einer bevorzugten Ausführungsform ist die Plattform mit wenigstens einem Zentrierstab versehen, der eine konische Spitze hat, mit der er in eine Zentrierbohrung des Greifwerkzeugs einfällt, um letzteres in Nullposition auszurichten. Anwendungsfallbezogen können ein oder mehrere Zentrierstäbe vorgesehen sein, die dann vorzugsweise in verschiedenen Raumrichtungen wirken und insbesondere paarweise orthogonal orientiert sein können.

Bei einer bevorzugten Ausführungsform läßt sich wenigstens ein Zentrierstab parallel zu der Achsrichtung der in Streckstellung befindlichen Kardangelenkarme verstellen.

Bei einer bevorzugten Ausführungsform ist der Quadrant, in dem die Kardangelenkarme angeordnet sind, länger als breit. Wenigstens ein Zentrierstab ist mittig zwischen zwei Kardangelenkarmen an der längeren Seite des Quadranten angeordnet.

Bei der Erfindung geht es um eine komplette Vorrichtung mit einem steifen Linearführungssystem für die Plattform und mit einem Greifwerkzeug, das mit Kardangelenkarmen an die Plattform angelenkt ist, beispielsweise einen Brückenkran, Portalkran, Portalroboter, aber auch um eine Ausgleichseinheit, mit Kardangelenkarmen, zur Anbringung zwischen der Plattform und dem Greifwerkzeug einer solchen Vorrichtung.

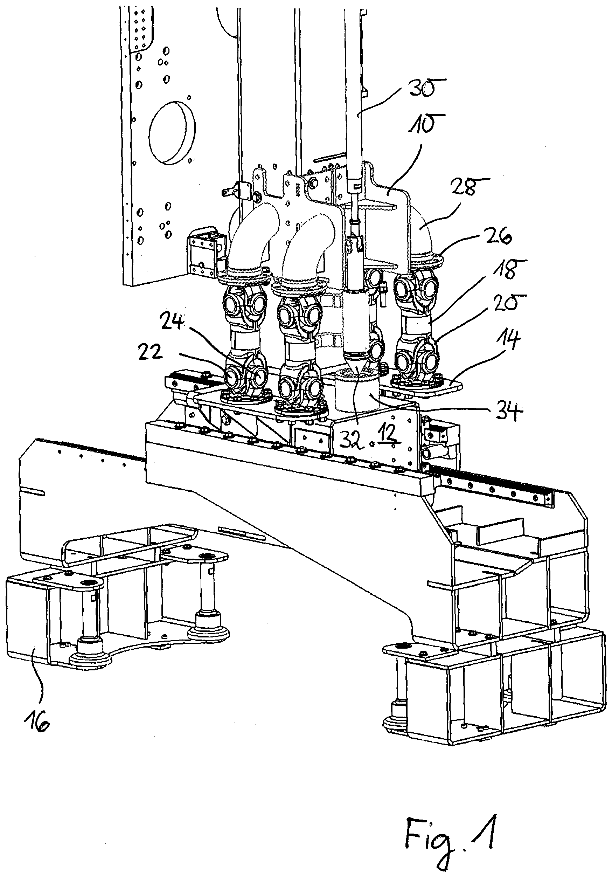

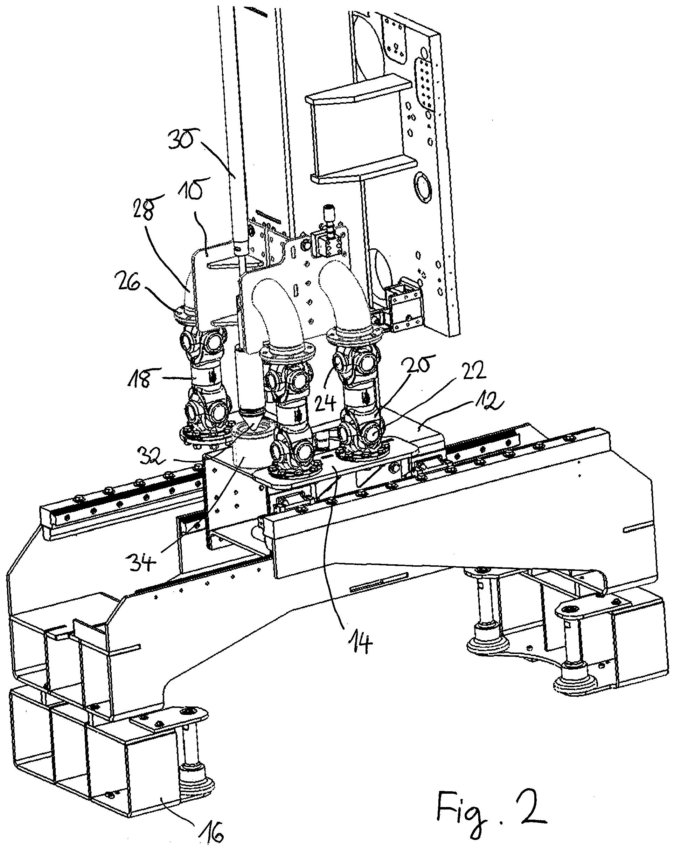

Die Erfindung wird im folgenden anhand eines in der Zeichnung dargestellten Ausführungsbeispiels näher erläutert. Gezeigt sind zwei perspektivische Ansichten einer Vorrichtung zum Greifen, Bewegen und Positionieren eines Gegenstands im Raum.

Frei im Raum hängend, erkennt man die mit einem robotischen Greifwerkzeug bestückte Plattform 10 eines Portalroboters. Die Plattform 10 läßt sich flurfrei in allen drei Raumrichtungen verfahren. Der Portalroboter ist auf das Greifen, Bewegen und präzise Positionieren eines massiven Gegenstands ausgelegt.

Das Greifwerkzeug hat einen vierkantrohrförmigen Grundrahmen 12 mit starr daran ansetzenden, zur Seite ausladenden Montagewinkeln 14. Der Grundrahmen 12 trägt ein Greifsystem mit zwei einander gegenüberliegenden, aufeinander zu und voneinander weg verstellbaren Backen 16. Das ist exemplarisch zu verstehen. Auf bauliche Einzelheiten des Greifsystems kommt es nicht an.

Das Greifwerkzeug hängt mit vier im Quadranten angeordneten Kardangelenkarmen an der Plattform 10.

Ein jeder Kardangelenkarm hat ein zylindrisches Mittelstück 18, dessen Längsachse sich in der Vertikalen erstreckt, und in symmetrischer Anordnung beidends davon oben und unten je einen Gelenkkopf mit zwei in Eingriff stehenden Gabelgelenken, deren Gelenkachsen senkrecht zueinander und quer zu der Längsachse des Mittelstücks 18 orientiert sind.

An dem Mittelstück 18 sitzt beidends starr eine äußere Gelenkgabel 20, die eine äußere Gelenkwelle 22 trägt. Die äußere Gelenkwelle 22 ist drehbar an den Gabelzinken der äußeren Gelenkgabel 20 gelagert. Sie ragt durch deren Gabelöffnung hindurch.

Die äußere Gelenkwelle 22 wird zentral in Querrichtung von einer inneren Gelenkwelle 24 durchsetzt. Die innere Gelenkwelle 24 ist drehbar an den Gabelzinken einer inneren Gelenkgabel gelagert, die bezüglich der äußeren Gelenkgabel 20 um 90° verdreht ist. Die innere Gelenkwelle 24 ragt durch die Gabelöffnung der inneren Gelenkgabel hindurch.

Die innere Gelenkgabel eines jeden der beidendigen Gelenkköpfe eines Kardangelenkarms ist mit einem Montageflansch versehen. Die Kardangelenkarme sind an ihren beidendigen Montageflanschen verschraubt.

Die Kardangelenkarme sitzen mit ihrem unteren Montageflansch an den Montagewinkeln 14 des Greifwerkzeugs. Mit ihrem oberen Montageflansch sitzen sie jeweils an dem Gegenflansch 26 eines 90°-Bogens 28, der starr von der Plattform 10 absteht.

Das Greifwerkzeug hat eine Nullposition, in der die Längsachsen aller vier Kardangelenkarme vertikal orientiert sind. Es wird in dieser Nullposition mit einem Zentrierstab 30 ausgerichtet. Der Zentrierstab 30 ist parallel zu der Längsachse der Kardangelenkarme verstellbar an der Plattform 10 angebracht. Er greift mit einer konischen Spitze 32 in die Zentrieröffnung eines Zylinderrings 34 ein, der paßgenau starr an dem Greifwerkzeug sitzt.

Der Quadrant, in dem die vier Kardangelenkarme angeordnet sind, ist nicht kubisch, sondern länger als breit. Der Zentrierstab 30 ist an der längeren Seite des Quadranten mittig zwischen zwei Kardangelenkarmen angeordnet.

### Liste der Bezugszeichen

- 10: Plattform
- 12: Grundrahmen
- 14: Montagewinkel
- 16: Backen
- 18: Mittelstück
- 20: äußere Gelenkgabel
- 22: äußere Gelenkwelle
- 24: innere Gelenkwelle
- 26: Gegenflansch
- 28: Bogen
- 30: Zentrierstab
- 32: Spitze
- 34: Zylinderring

## Patentansprüche

1. Vorrichtung zum Greifen, Bewegen und Positionieren eines Gegenstands im Raum mit einer flurfrei dreidimensional verstellbeweglich angetriebenen Plattform (10) und mit einem Greifwerkzeug, das schwimmend beweglich an der Plattform (10) angebracht ist, so dass es beim Ergreifen des Gegenstands eine Ausgleichsbewegung zu vollführen geeignet und diese kompensierend ausrichtbar ist, wobei das Greifwerkzeug mit wenigstens drei, vorzugsweise einer geraden Zahl, im allgemeinen vier, im Quadranten angeordneten Kardangelenkarmen an der Plattform (10) angelenkt ist.

2. Vorrichtung nach Anspruch 1, **dadurch gekennzeichnet, dass** ein jeder Kardangelenkarm beidendig Drehfreiheit um zwei zueinander senkrechte Drehachsen hat, die sich quer zu der Längsachse des Kardangelenkarms erstrecken.

3. Vorrichtung nach Anspruch 1 oder 2, **dadurch gekennzeichnet, dass** die Kardangelenkarme in sich spiegelsymmetrisch sind.

4. Vorrichtung nach einem der Ansprüche 1 bis 3, **dadurch gekennzeichnet, dass** alle Kardangelenkarme baugleich sind.

5. Vorrichtung nach einem der Ansprüche 1 bis 4, **dadurch gekennzeichnet, dass** das Greifwerkzeug unterhalb der Plattform (10) eine Nullposition hat, in der die Kardangelenkarme eine achsparallele Streckstellung mit vertikaler Längsachse einnehmen.

6. Vorrichtung Anspruch 5, **dadurch gekennzeichnet, dass** die Plattform (10) mit wenigstens einem Zentrierstab (30) versehen ist, der eine konische Spitze (32) hat, mit der er in eine Zentrierbohrung des Greifwerkzeugs einfährt, um letzteres in der Nullposition auszurichten.

7. Vorrichtung nach Anspruch 6, **dadurch gekennzeichnet, dass** wenigstens ein Zentrierstab (30) parallel zu der Achsrichtung der in Streckstellung befindlichen Kardangelenkarme verstellbar ist.

8. Vorrichtung nach Anspruch 6 oder 7, **dadurch gekennzeichnet, dass** der Quadrant, in dem die Kardangelenkarme angeordnet sind, länger ist als breit, und dass wenigstens ein Zentrierstab (30) mittig zwischen zwei Kardangelenkarmen an der längeren Seite des Quadranten angeordnet ist.

9. Vorrichtung mit einem steifen Linearführungssystem für die Plattform (10), insbesondere Brückenkran, Portalkran, Portalroboter, nach einem der Ansprüche 1 bis 8.

10. Ausgleichseinheit, mit Kardangelenkarmen, zur Anbringung zwischen der Plattform (10) und dem Greifwerkzeug einer Vorrichtung nach einem der Ansprüche 1 bis 9.

## Claims

1. Device for gripping, moving and positioning an object in space, comprising a platform (10) which is driven overhead so as to be displaceable in three dimensions, and a gripping tool which is movably attached to the platform (10) in a floating manner so that, when grasping the object, it is able to carry out a compensation movement and can be oriented to compensate this movement, wherein the gripping tool is articulated to the platform (10) by means of at least three, preferably an even number, generally four, Cardan joint arms arranged in a quadrant.

2. Device according to claim 1, **characterised in that** each Cardan joint arm has, at both ends, a degree of rotational freedom about two axes of rotation that are perpendicular to one another and extend transversely to the longitudinal axis of the Cardan joint arm.

3. Device according to either claim 1 or claim 2, **characterised in that** the Cardan joint arms are intrinsically mirror-symmetrical.

4. Device according to any of claims 1 to 3, **characterised in that** all the Cardan joint arms have the same construction.

5. Device according to any of claims 1 to 4, **characterised in that** the gripping tool below the platform (10) has a zero position, in which the Cardan joint arms assume an extended position that is axially in parallel with the vertical longitudinal axis.

6. Device according to claim 5, **characterised in that** the platform (10) is provided with at least one centring rod (30) having a conical tip (32), by means of which said rod enters a centring bore in the gripping tool in order to orient said tool in the zero position.

7. Device according to claim 6, **characterised in that** at least one centring rod (30) can be moved in parallel with the axial direction of the Cardan joint arms that are in the extended position.

8. Device according to either claim 6 or claim 7, **characterised in that** the quadrant, in which the Cardan joint arms are arranged, is longer than it is wide, and **in that** at least one centring rod (30) is arranged on the longer side of the quadrant, in the centre between two Cardan joint arms.

9. Device comprising a rigid linear guide system for the platform (10), in particular a bridge crane, gantry crane or a gantry robot, according to any of claims 1 to 8.

10. Compensation unit comprising Cardan joint arms for attachment between the platform (10) and the gripping tool of a device according to any of claims 1 to 9.

## Revendications

1. Dispositif de préhension, de déplacement et de positionnement d'un objet dans l'espace, comprenant une plate-forme (10) entraînée en déplacement par ajustement, tridimensionnel, suspendu et un outil de préhension, qui est installé de manière flottante et mobile au niveau de la plate-forme (10) de sorte qu'il est adapté pour réaliser, lors de la saisie de l'objet, un déplacement d'équilibre et que ce dernier peut être orienté avec un effet de compensation, dans lequel l'outil de préhension est articulé au niveau de la plate-forme (10) avec au moins trois, de préférence un nombre entier, en général quatre, bras à joint de cardan disposés dans le quadrant.

2. Dispositif selon la revendication 1, **caractérisé en ce que** chaque bras à joint de cardan a de part et d'autre une liberté de rotation autour de deux axes de rotation perpendiculaires l'un par rapport à l'autre, lesquels s'étendent de manière transversale par rapport à l'axe longitudinal du bras à joint de cardan.

3. Dispositif selon la revendication 1 ou 2, **caractérisé en ce que** les bras à joint de cardan sont en soi en symétrie de miroir.

4. Dispositif selon l'une quelconque des revendications 1 à 3, **caractérisé en ce que** tous les bras à joint de cardan sont de structure identique.

5. Dispositif selon l'une quelconque des revendications 1 à 4, **caractérisé en ce que** l'outil de préhension a sous la plate-forme (10) une position zéro, dans laquelle les bras à joint de cardan adoptent une position d'étirage parallèle axialement avec un axe longitudinal vertical.

6. Dispositif selon la revendication 5, **caractérisé en ce que** la plate-forme (10) est pourvue d'au moins une barre de centrage (30), qui a une pointe (32) conique, par laquelle la barre de centrage rentre dans un alésage de centrage de l'outil de préhension afin d'orienter ce dernier dans la position zéro.

7. Dispositif selon la revendication 6, **caractérisé en ce qu'**au moins une barre de centrage (30) peut être ajustée de manière parallèle par rapport à la direction axiale des bras à joint de cardan se trouvant dans la position d'étirage.

8. Dispositif selon la revendication 6 ou 7, **caractérisé en ce que** le quadrant, dans lequel les bras à joint de cardan sont disposés, est plus long que large, et **en ce qu'**au moins une barre de centrage (30) est disposée au centre entre deux bras à joint de cardan au niveau du côté plus long du quadrant.

9. Dispositif comprenant un système de guidage linéaire rigide pour la plate-forme (10), en particulier un pont roulant, une grue à portique, un robot portique, selon l'une quelconque des revendications 1 à 8.

10. Unité d'équilibre, comprenant des bras à joint de cardan, destinée à être installée entre la plate-forme (10) et l'outil de préhension d'un dispositif selon l'une quelconque des revendications 1 à 9.
